# EUROPEAN PATENT SPECIFICATION

(11) **EP 3 441 186 B1**
(45) Date of publication and mention of the grant of the patent: **24.01.2024**
(21) Application number: 18188097.2
(22) Date of filing: 08.08.2018
(51) Int. Cl.: B24C 1/04, B24C 7/00, B26F 1/26, B26F 3/00, B24C 5/04, B26D 5/00, G01F 1/00, G01F 1/34, G05B 19/042

(54) **WATER JET DEVICE WITH SENSOR AND METHOD FOR WATER JET CUTTING**
WASSERSTRAHLVORRICHTUNG MIT SENSOR UND VERFAHREN ZUM WASSERSTRAHLSCHNEIDEN
DISPOSITIF A JET D'EAU AVEC CAPTEUR ET PROCÉDÉ POUR LE DÉCOUPAGE AU JET D'EAU

(30) Priority: 08.08.2017 BE 201705547
(43) Date of publication of application: 13.02.2019
(73) Proprietor: D.E.C.O. Nv, 8000 Brugge (BE); Kuipers, 2450 Meerhout (BE)
(72) Inventor: Janitschek, Paulus, 2450 Meerhout (BE); Lehouck, Chris, 8000 Brugge (BE)
(74) Representative: Brantsandpatents bv

(56) References cited:
- EP-A2- 0 984 264
- WO-A1-92/20456
- WO-A1-2004/076075
- CN-A- 105 312 781
- DE-U1- 9 404 973
- FR-A1- 2 699 852
- GB-A- 2 249 045
- US-A- 4 594 924
- US-A- 4 711 056

## Description

### TECHNICAL FIELD

The present invention relates to devices and methods according to the preamble of the independent claims 1 and 6 for water jet cutting of a material or surface. In particular, the invention relates to devices and methods for detecting or ensuring a complete incision of the material or surface.

### BACKGROUND

A multitude of industrial applications require the dimensioning of materials. Water jet cutting techniques is a preferred technique for many cutting applications since heating does not occur and consequently no deformation of materials takes place and an almost burr-free cut is obtained of high quality. An important disadvantage of water jet cutting techniques; however, is that there is not a complete certainty about the completeness of the incision; this is unless the cutting time is increased. However, it is, also, an intention to limit the time of the cutting operation, both for large industrial works such as the decommissioning of drilling platforms and for mass production of smaller objects. Therefore, according to the prior art several analysis or detection methods have already been developed which are aimed at obtaining a greater certainty about the completeness of the incision. For this purpose, BE 1022679 describes a method for detecting an incision in a structure, comprising the steps of: transmitting a vibration on said structure, thereby obtaining a resulting signal; monitoring said resulting signal; and processing said resulting signal.

WO 2010/035042 describes a method for testing the through-cut of a pipeline, wherein an electromagnetic signal and reflected signals thereof are monitored and analyzed for determining the through-cut. This provides a non-invasive test method. The main drawback of such a method is that the electromagnetic signal is not always easy to analyze, but moreover that the analysis method is not always accurate.

Previously, other physical test methods were developed to determine a through-cut in a surface. US 2009/314489 provides a method which is based on the analysis of acoustic signals for imaging the incision. US 2014/0284482, on the other hand, suggests the use of an infrared detection method.

WO 92/20456 A1 relates generally to fluid jet nozzles and more particularly to a flow sensor located in a chamber downstream of the orifice to sense the flow characteristics of the fluid jet, and the condition of the nozzle orifice and represents the closest prior art to the subject matter of claims 1 and 6.

In practice, the aforementioned methods prove difficult to use on the one hand and on the other hand they are not very accurate - especially when the incomplete cross-section of a surface or the pipeline is restricted to a small, difficult to detect uncut section. It is an object of the present invention to provide a simple detection method which can determine to a very large degree of accuracy whether an incision is complete or not. It is also an intention to provide a detection method that can be used during the cutting operation. In this way, the completeness of the incision can be ensured before moving the cutting device. Especially in applications where the accuracy of the incision is important, it is not desirable to move the water jet head before the incision is complete.

The present invention aims to provide a solution for one or more of the aforementioned problems or shortcomings.

### SUMMARY

To this aim, the invention provides a water jet device and method for detecting a cut, according to claims 1 and 6, respectively.

To this aim, the invention provides a high-pressure water jet device, according to a first aspect, comprising a section for generating a high-pressure water jet, wherein said section for generating a high-pressure water jet debouches into a pressure chamber, wherein said pressure chamber is provided with an opening in a wall of said pressure chamber and wherein said pressure chamber and said opening are in fluid communication with a pressure sensor for determining a pressure through said fluid communication and/or wherein said pressure chamber and said opening are in fluid communication with a flow sensor for determining a flow rate through said fluid communication, wherein said pressure chamber and said opening are in fluid communication with a pump for preventing water from entering the fluid communication.

This offers the advantage that (i) a simple and reliable detection method is provided; (ii) the benefits of water jet cutting are maintained; (iii) both larger and smaller objects can be cut, also in marine conditions; (iv) detectors do not need to be applied to the structure to be cut; and (v) during cutting, an indication of the completeness of the incision is already obtained, which contributes to the precision and execution speed of the cutting operation.

In a second aspect, the present invention provides a method for water jet cutting a surface with a high-pressure water jet device, comprising the steps of: (i) generating a high-pressure water jet; and directing said high-pressure water jet onto the surface to be cut, wherein said high-pressure water jet is guided through a pressure chamber; wherein said pressure chamber is provided with an opening in a wall of said pressure chamber, and wherein said pressure chamber and said opening are in fluid communication with a pressure sensor for determining a pressure through said fluid communication during step (ii) and/or wherein said pressure chamber and said opening are in fluid communication with a flow sensor for determining a flow rate through said fluid communication during step (ii), whereby a pre-pressure is applied in said pressure chamber by means of the pump.

### DESCRIPTION OF THE FIGURES

The explicit characteristics, advantages and objectives of the present invention will be further clarified for the skilled person in the technical field of the invention, after reading the following detailed description of the embodiment of the invention and of the figures enclosed therein. The figures should further illustrate the invention without thereby limiting the scope of the invention.
Figures 1 to 3 represent a simplified representation of the principle of the invention.
Figure 1A shows a water jet cutter according to the invention. The water jet cutter comprises a section 1 for generating a high-pressure water jet and a pressure chamber 2, which pressure chamber is provided with a pressure sensor, 22, 23, 27.
Figure 1B shows the embodiment according to Figure 1A in which the incision 31 in the surface to be cut 3 is completed, which results in a reduced pressure P₂ in the pressure chamber 2.
Figure 2A shows a water jet cutter according to the invention. The water jet cutter comprises a section 1 for generating a high-pressure water jet and a pressure chamber 2, which pressure chamber is in fluid communication with a flow sensor 27'.
Figure 2B shows the embodiment according to Figure 2A in which the incision 31 in the surface to be cut 3 is completed, which results in an increased flow rate F₂ through the fluid connection 23 which debouches into the pressure chamber 2.
Figure 3 is a schematic representation of the invention, whereby the housing 21 is conically executed, internally.
Figure 4 is a schematic representation of the invention in which the housing 21 is conically executed, so that both the inner diameter and the outer diameter of the housing 21 increase as the distance to the mixing pipe 16 increases.

### DETAILED DESCRIPTION OF THE INVENTION

Unless otherwise defined, all terms used in the description of the invention, including technical and scientific terms, have the meaning as commonly understood by the skilled person in the technical field of the invention. For a better assessment of the description of the invention, the following terms are explained explicitly.

"A", "an" and "the"refer in this document to both the singular and the plural unless the context clearly implies otherwise. For example, "a segment" means one or more than one segment.

When "around" or "about" is used in this document with a measurable quantity, a parameter, a time period or moment in time, and the like, then variations are intended of +/- 20% or less, preferably +/- 10% or less, more preferably +/- 5% or less, even more preferably +/- 1% or less, and even more preferably +/- 0.1% or less than and of the cited value, if such variations are applicable in the described invention. It should, however, be understood that the value of the quantity using the term "around" or "about" is itself specifically disclosed.

The terms "comprise", "comprising", "consist of", "consisting of", "provided with", "include", "including", "contain", "containing", "encompass", "encompassing" are synonyms and are inclusive or open terms indicating the presence of what follows and which do not exclude or prevent the presence of other components, features, elements, members, steps known from or described in the prior art.

The citation of numerical intervals by the endpoints includes all integers, fractions and/or real numbers between the endpoints, including these endpoints.

In a first embodiment, the invention provides a high-pressure water jet device comprising a section for generating a high-pressure water jet, wherein said section for generating a high-pressure water jet debouches into a pressure chamber, and wherein said pressure chamber is provided with a pressure sensor for determining a pressure in said pressure chamber.

The term "pressure chamber" is to be regarded as a case or housing around or connectable to the outlet for the high-pressure water jet. Such a housing is preferably provided with a cylindrical, and preferably a conical wall with an open ground and top surface. The open ground and top surface are essentially open so that the high-pressure water jet can move through the cylindrical or conical wall in the longitudinal direction.

When a high-pressure water jet passes through the pressure chamber, a vacuum or under pressure will arise as a result of the high speed, in accordance with the Bernouilli Law - also known as the Venturi effect. The pressure sensor in the pressure chamber will detect a lower pressure P₂ accordingly.

However, when an object interferes with the high-pressure water jet, as in the case of an object that is not or incompletely cut, the object will turn the high-pressure water jet. As a result, a higher pressure P₁ is detected in the pressure chamber, which pressure P₁ will be detected correspondingly, by the pressure sensor in the pressure chamber.

Once the incision of the high-pressure water jet through the object is complete, the object will not turn the high-pressure water jet any longer and the reduced pressure P₂ is again detected. In this way the pressure sensor can 'detect', in the pressure chamber, whether or not the object to be cut has been completely cut.

If the desired punctiform or line-shaped cut is complete, the cutting operation can be stopped. If a line-shaped cut is to be continued, the operator can move the high-pressure water jet cutter in the direction of the desired line-shaped incision. This last displacement will show that again a higher pressure P₁ is detected in the pressure chamber until the new incision is complete and again a reduced pressure P₂ is detected.

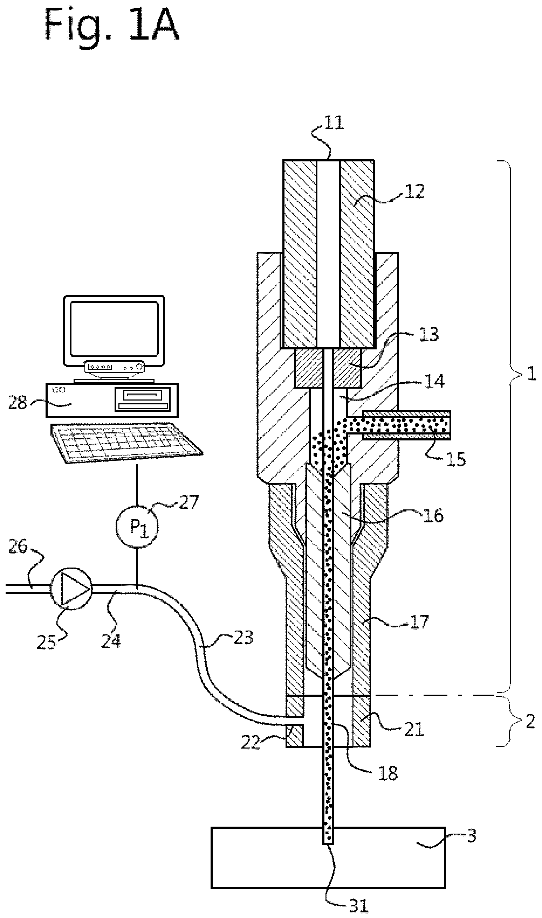

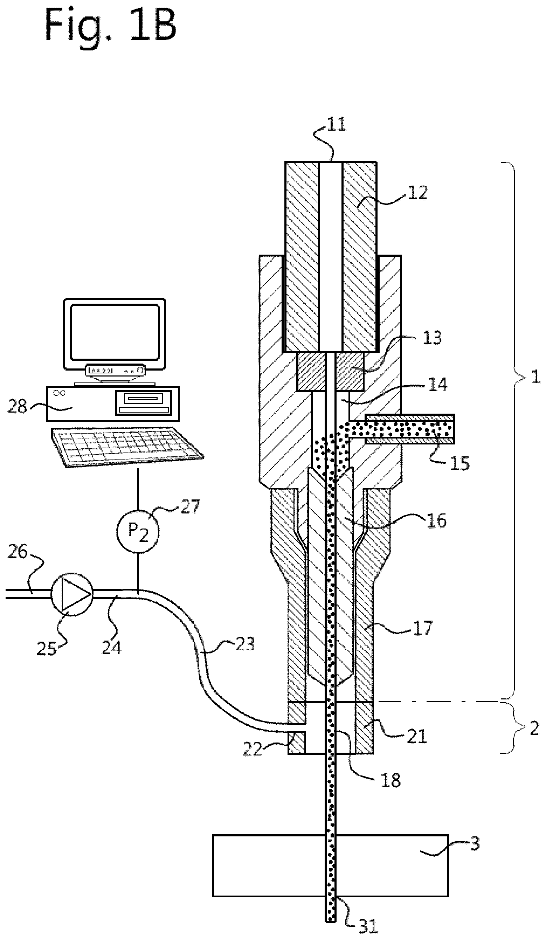

The principle of the cutting operation, using a pressure sensor in the pressure chamber, is illustrated with the assistance of Figure 1. Figure 1A shows a water jet cutter 1, 2 according to the invention. The water jet cutter comprises a section 1 for generating a high-pressure water jet. For this purpose, water 11 is supplied under high pressure in a guide tube 12 and guided through a narrow opening in a diamond 13 to a mixing chamber 14 where the water 11 is mixed with an abrasive jet 15. The mixture of water 11 and abrasive jet 15 is guided through a mixing pipe 16, where a homogeneous mixture is formed. The housing 17 provides protection and a good positioning of the mixing pipe 16.

When leaving the mixing pipe 16, the high-pressure water jet 18 reaches the height of the housing 21 in a pressure chamber 2. Due to the high speed of the high-pressure water jet 18, a vacuum is realized within the housing 21, thereby forming a vacuum or under pressure. The pressure in the pressure chamber 2 can be measured by means of an opening 22 in the wall of the housing 21. For this purpose, an air pump 25 with air supply 26 is connected via a fluid connection 23, 24 to the opening 22 in the wall of the housing 21. The air pump 25 provides a constant pressure of for example 4 bar to compensate for the suction effect. A pressure gauge 27 monitors the pressure in the pressure chamber 2, within the housing 21.

As the high-pressure water jet 18 reaches the surface to be cut 3 at the level of the incision 31, a recoil effect is produced, as a result of which the vacuum in the pressure chamber 2 is broken, resulting in a well-defined pressure P₁ in the pressure chamber 2. This pressure P₁ is measured by means of pressure gauge 27. Pressure P₁; thus, gives an indication that the incision 31 in the surface to be cut 3 is not complete and that the cutting operation must, therefore, be continued. The pressure signal is transmitted to a computer system 28 for managing and controlling the cutting apparatus, 1, 2.

Figure 1B shows the embodiment according to Figure 1A in which the incision 31 in the surface to be cut 3 is complete. In this embodiment there is not a recoil effect and the vacuum in the pressure chamber 2 is not broken. This results in a well-defined pressure P₂ in the pressure chamber 2. This pressure P₂ is detected by means of pressure gauge 27. Pressure P₂ thus, gives an indication that the incision in the surface to be cut 3 is complete and that consequently the cutting operation is complete. The pressure signal is transmitted to a computer system 28 for managing and controlling the cutting apparatus, 1, 2.

The detection of the recoil effect in the pressure chamber 2, and consequently the pressure difference P₂-P₁, depends on the geometry of the pressure chamber 2 as well as on the distance of the water jet device to the surface to be cut. The skilled person will understand that for a good quality of the detection the water jet device must be brought sufficiently close to the surface to be cut.

In an equivalent but alternative embodiment, the high-pressure water jet device and the method for detecting an incision according to the invention can be used without supplying abrasive jet to the high-pressure water jet.

The simplicity of the pressure measurement provides a simple system for detecting a full incision. Known systems such as those using vibration signals are less reliable in use because the vibration signals are more difficult to analyze. In contrast, the present invention provides a clear and accurate way to analyze the pressure signal.

The aforementioned system contains the advantages of water jet cutting, such as not heating and deforming the object to be cut and eliminates the main disadvantage of water jet cutting: ensuring a complete cross-section during water jet cutting. In addition, the above-mentioned cutting technique is very accurate; even if incisions with a diameter of 50 to 100 µm have to be provided in a plate, the completeness of the incision can be determined with absolute certainty. For larger structures, such as decommissioning of a drilling platform, the technique can be used to ensure a complete cross-section before the cut structure is lifted. The technique can be applied even when cutting structures in the seabed. In addition, the detection technique is very simple compared to, for example, vibrational detection techniques in which a complex signal analysis has to be applied - which in practice is often at the expense of a reliable result. As the analysis technique is used during the cutting operation, a "real-time" image of the incision is formed. This is advantageous for limiting the time required for the cutting operation.

In addition, known systems according to the prior art require detectors to be fitted on the object to be cut. Certainly, in the case of cutting underwater structures, the fitting and subsequent removal of such detectors is an additional difficulty. Also, in the case of cutting small objects, fitting and removing detectors on the objects is a cumbersome and inefficient operation. On the contrary, the present invention provides that the measuring infrastructure is provided on the cutting device so that detectors do not need to be applied to the structures or objects to be cut.

Alternative methods for determining a pressure, such as for instance the use of a capacitor, can also be used successfully for determining the pressure in the pressure chamber. This offers the advantage that a pump system does not need to be used, which simplifies the system. Such pressure sensors, which are not based on a fluid communication with the pressure chamber, can subsequently transmit an electronic signal to a control system for managing the high-pressure water jet device.

In a first aspect, the present invention provides a high-pressure water jet device comprising a section for generating a high-pressure water jet, wherein said section for generating a high-pressure water jet debouches into a pressure chamber and wherein said pressure chamber is in fluid communication, with a flow sensor for determining a flow rate through said fluid communication.

When a high-pressure water jet passes through the pressure chamber, a vacuum or under pressure will arise as a result of the high speed, in accordance with the Bernouilli Law - also known as the Venturi effect. The flow sensor will detect a flow rate F₂ accordingly.

However, when an object interferes with the high-pressure water jet, as in the case of an object that is not or incompletely cut, the object will turn the high-pressure water jet. As a result, the pressure in the pressure chamber rises and the flow rate through the fluid communication decreases. Thus, a lower flow rate F₁ is detected in the pressure chamber.

Once the incision of the high-pressure water jet through the object is complete, the object will not turn the high-pressure water jet any longer and a higher flow rate F₂ is again detected. In this way, the flow sensor can, in fluid communication with the pressure chamber, 'detect' whether or not the object to be cut has been completely cut.

If the desired punctiform or line-shaped cut is complete, the cutting operation can be stopped. If a line-shaped cut is to be continued, the operator can move the high-pressure water jet cutter in the direction of the desired line-shaped incision. This last displacement will show that again a lower flow rate F₁ through the fluid communication is detected in the pressure chamber until the new incision is complete and again an increased flow rate F₂ is observed.

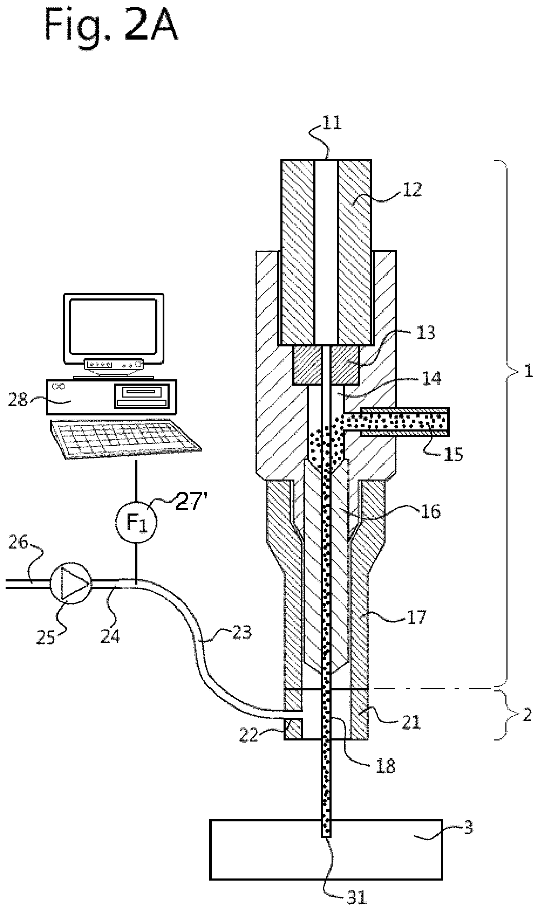

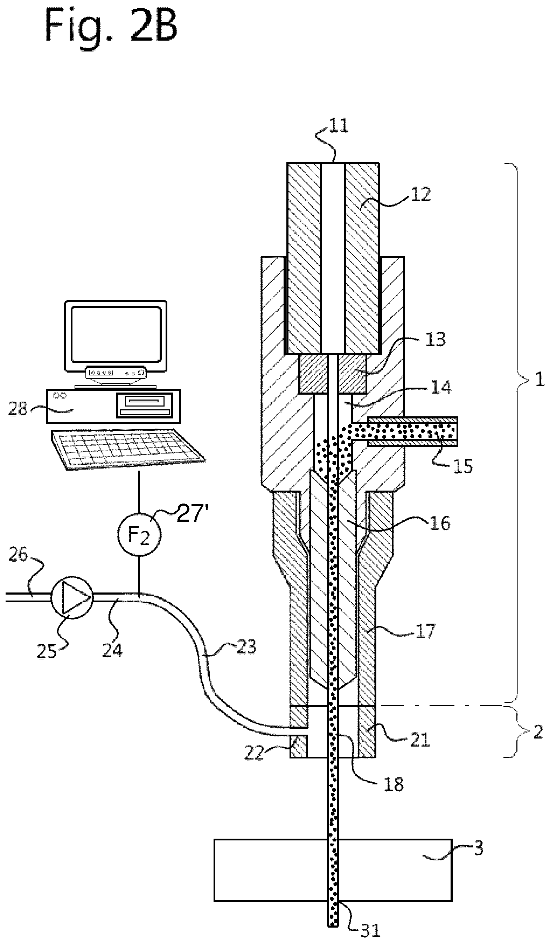

The principle of the cutting operation, using a flow sensor in fluid communication with the pressure chamber is illustrated with reference to Figure 2. Figure 2A shows a water jet cutter 1, 2 according to the first aspect of the invention. The water jet cutting device comprises a section 1 for generating a high-pressure water jet. For this purpose, water 11 is supplied under high pressure in a guide tube 12 and guided through a narrow opening in a diamond 13 to a mixing chamber 14 where the water 11 is mixed with an abrasive jet 15. The mixture of water 11 and abrasive jet 15 is guided through a mixing pipe 16, where a homogeneous mixture is formed. The housing 17 provides protection and good positioning of the mixing pipe 16.

On leaving the mixing pipe 16, the high-pressure water jet 18 reaches the height of the housing 21 in a pressure chamber 2. Due to the high speed of the high-pressure water jet 18, a vacuum is realized within the housing 21, thereby forming a vacuum or under pressure in the pressure chamber 2. By means of an opening 22 in the wall of the housing 21 and the fluid communication 23 connected thereto, the flow rate through the fluid communication to the pressure chamber 2 can be measured. For this purpose, an air pump 25 with air supply 26 is connected via the fluid guide 23, 24 to the opening 22 in the wall of the housing 21. The air pump 25 provides a constant pressure of for example 4 bar to compensate for the suction effect. A flow sensor 27' monitors the flow rate F through the fluid communication 23 to the pressure chamber 2 within the housing 21.

Because the high-pressure water jet 18 reaches the surface to be cut 3 at the level of the incision 31, a recoil effect is produced, as a result of which the vacuum in the pressure chamber 2 is broken, resulting in a well-defined pressure P₁ in the pressure chamber 2 and a corresponding flow rate F₁ through the fluid communication 23. This flow rate F₁ is measured by means of the flow meter 27. Flow rate F_{1;} thus, gives an indication that the incision 31 in the surface to be cut 3 is not complete and that the cutting operation must therefore, be continued. The flow signal is transmitted to a computer system 28 for managing and controlling the cutting apparatus, 1, 2.

Figure 2B shows the embodiment according to Figure 2A in which the incision 31 in the surface 3 to be cut is complete. In this embodiment there is not a recoil effect and the vacuum in the pressure chamber 2 is not broken. This results in a well-defined pressure P₂ in the pressure chamber 2 and a corresponding flow rate F₂ through the fluid communication 23. This flow rate F₂ is detected by means of the flow meter 27'. Flow rate F₂; thus, gives an indication that the incision in the surface to be cut 3 is complete and that consequently the cutting operation is complete. The pressure signal is transmitted to a computer system 28 for managing and controlling the cutting apparatus, 1, 2.

Such an embodiment offers the advantage that, due to the simplicity of the flow measurement, a simple system is provided for detecting a complete incision. In addition, the inventors found that the flow measurement offers much more accurate results compared to the use of a pressure measurement. As soon as the incision shows a lower quality, it appears that the flow rate is immediately and drastically reduced. The use of a pressure measurement proved to be a lot less reliable and less sensitive to changes in the cutting quality.

In an equivalent but alternative embodiment, the high-pressure water jet device and the method for detecting an incision according to the invention can be used without supplying abrasive jet to the high-pressure water jet.

The aforementioned system contains the advantages of water jet cutting, such as not heating and deforming the object to be cut and eliminates the main disadvantage of water jet cutting: ensuring a complete cross-section during water jet cutting. In addition, the above cutting technique is very accurate; even if incisions with a diameter of 50 to 100 µm must be provided in a plate, the completeness of the incision can be determined with absolute certainty. For larger structures, such as decommissioning of a drilling platform, the technique can be used to ensure a complete cross-section before the cut structure is lifted. The technique can be applied even when cutting structures in the seabed. In addition, the detection technique is very simple compared to, for example, vibrational detection techniques in which a complex signal analysis must be applied - which in practice is often at the expense of a reliable result. As the analysis technique is used during the cutting operation, a "real-time" image of the incision is formed. This is advantageous for limiting the time required for the cutting operation. In addition, known systems according to the prior art require detectors to be fitted to the object to be cut. Certainly, in the case of cutting underwater structures, the fitting and subsequent removal of such detectors is an additional difficulty. Also, in the case of cutting small objects, fitting and removing detectors on the objects is a cumbersome and inefficient operation. On the contrary, the present invention provides that the measuring infrastructure is provided on the cutting device so that detectors do not need to be fitted to the structures or objects to be cut.

For the flow measurement itself, use can be made of various methods known to the skilled person. A flow meter is a measuring instrument with which the flow (as mass or volume) of a gas or liquid per unit of time (the flow rate) in pipes can be measured. For the measurement of a flow rate, several measurement principles are used, including:
- Delta-P, differential pressure measurement over a restriction
- speed measurement (inter alia pitot tube, anemometer),
- Vadometer, (variable cross-section - or rotameter), a ball is pushed upwards in a vertical conical tube through the medium flowing through until the weight of the ball is in balance with the force of the medium flowing there,
- displacement meter,
- paddle meter or turbine meter,
- ultrasonic, measures the speed of sound with the current and against the current, the difference is a measure of the flow speed and derived therefrom the flow rate,
- electromagnetic flow meter, measures the generated voltage perpendicular to an induced magnetic field,
- vortex flow meter measures the flow through the frequency of the swirls that form behind a specially formed obstruction,
- coriolis-mass flow meter,
- thermally, measures the heating caused by a heating element.

Although there are more measuring principles with which a mass flow rate can be measured directly, the differential pressure measurement, the turbine measurement and the coriolization measurement are preferred measuring principles.

The invention provides a high-pressure water jet device according to the first aspect of the invention, wherein said pressure chamber is provided with an opening in a wall of said pressure chamber, and wherein said opening is in fluid communication with said flow sensor. This provides a simple setup for the flow sensor, with known materials and analysis techniques. As the flow sensor is mounted on the high-pressure water jet device, this flow sensor is also easy to control. Placement of the sensors on the structures to be cut is not required.

The invention provides a high-pressure water jet device according to the first aspect of the invention, wherein said opening in said wall of said pressure chamber is in fluid communication with a pump, preferably a liquid pump, and more preferably a water pump. Such a pump offers the advantage that an overpressure can be provided within the pressure chamber. Such liquid pump also prevents water, possibly with abrasive jet, from entering the fluid communication and preventing the flow measurement or damaging the equipment. In a preferred embodiment, the invention provides a high-pressure water jet device according to the first aspect of the invention, wherein said opening in said wall of said pressure chamber is in fluid communication with preferably an air pump. Such a pump offers the advantage that an overpressure can be provided within the pressure chamber. This prevents water from entering the fluid connection and prevents pressure or flow detection. Surprisingly, the inventors found that the delivered pressure of the pump, more specifically of the air pump, has a direct influence on the shape of the incision. More specifically, it was found that the incision does not necessarily provide a straight incision wall, but that a slope in the incision wall could be realized. For example, a conical point cut could be realized in a surface where the inclination of the conical point cut could be adjusted, by adjusting the pressure supplied by the pump.

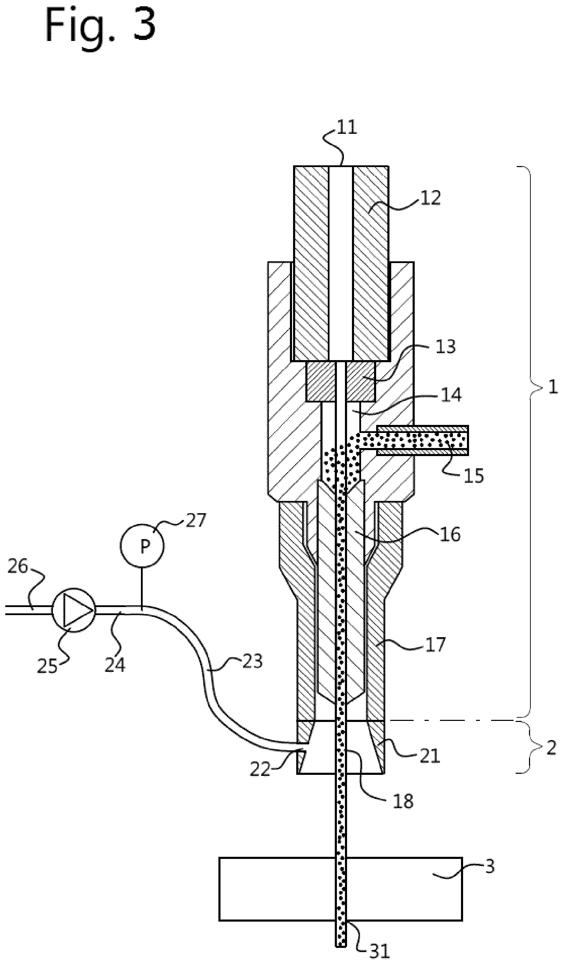

In a preferred embodiment, the invention provides a high-pressure water jet device according to the first aspect of the invention, wherein the internal wall of the said pressure chamber is conically provided. This means that the inside diameter of said conical internal wall becomes larger as the distance to said section for generating a high-pressure water jet is greater. This offers the advantage that the pressure in the pressure chamber is also lowered due to the increasing internal diameter. Figure 3 is a schematic representation of the above-mentioned embodiment, in which the housing 21 has an internal conical configuration, so that the inner diameter of the housing 21 increases as the distance to the mixing pipe 16 increases. The outer diameter of the housing 21 remains constant throughout the entire length of the housing 21. This offers the advantage that the vacuum in the pressure chamber 2 increases within the housing 21 as the distance to the mixing pipe 16 increases. A larger vacuum allows a more accurate pressure measurement to be realized.

In a preferred embodiment, the invention provides a high-pressure water jet device according to the first aspect of the invention, wherein the external wall of said pressure chamber is conically provided. This means that the outer diameter of said conical external wall becomes greater as the distance to said section for generating a high-pressure water jet is greater. Even more preferably the invention provides such a high-pressure water jet device in which both the inner diameter and the outer diameter of said conical wall become larger as the distance to the said section for generating a high-pressure water jet is greater. This offers the advantage that a larger diameter can be realized, and correspondingly that an improved vacuum can be realized.

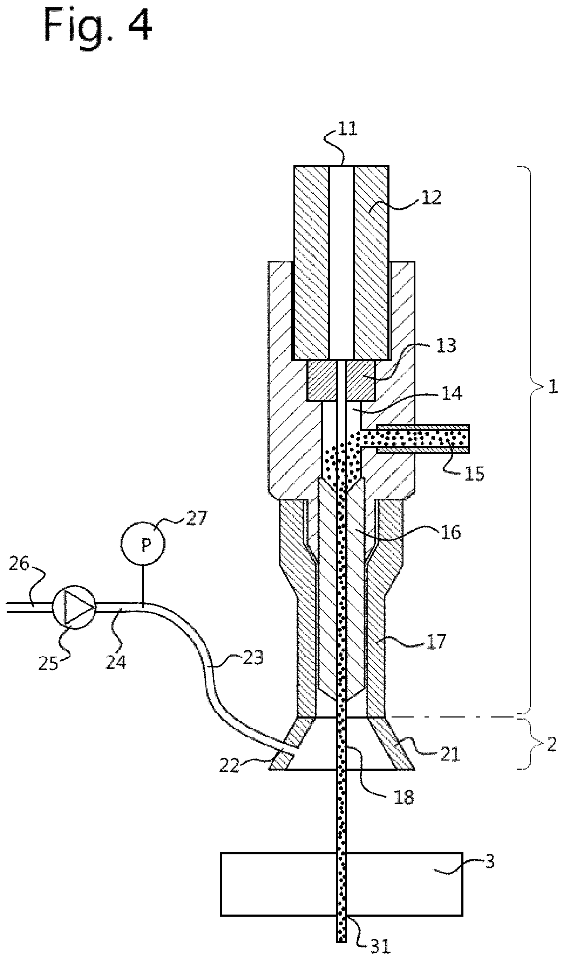

Figure 4 schematically shows an embodiment according to the above-mentioned aspect, wherein the housing 21 is conical, so that both the inner diameter and the outer diameter of the housing 21 increase as the distance to the mixing pipe 16 increases. This offers the additional advantage that the inside diameter of the housing 21 can increase to a larger dimension in comparison with the outer diameter of the housing 17. In this way, a larger vacuum can be realized in the pressure chamber 2 within the housing 21 and; thus, a more accurate measurement of the flow rate through the fluid communication connected to the pressure chamber 2 can be realized, more specifically a more accurate measurement of the flow rate difference F₁-F₂ through the fluid communication adjoining the pressure chamber 2.

In a preferred embodiment, the invention provides a high-pressure water jet device according to the first aspect of the invention, wherein said pressure and/or flow sensor is configured to transmit a signal, preferably an electronic signal, to a central processing unit for controlling of said high-pressure water jet device. This enables a reliable and accurate control of the high-pressure water jet device to be realized with a simple method.

In a preferred embodiment, the invention provides a high-pressure water jet device according to the first aspect of the invention, wherein said high-pressure water jet device is configured to operate in an aqueous environment. In this way, the high-pressure water jet device can be used in a marine environment.

In a second aspect, the invention provides a method for water jet cutting a surface with a high-pressure water jet device, comprising the steps of: (i) generating a high- pressure water jet; and (ii) directing said high-pressure water jet onto the surface to be cut, whereby said high-pressure water jet being guided through a pressure chamber and wherein said pressure chamber is in fluid communication with a flow sensor for determining a flow rate through said fluid communication during step (ii) and/or during step (i).' Such a method offers the same advantages as for the aforementioned high-pressure water jet device according to the first aspect of the invention with the same characteristic properties.

In a preferred embodiment, the invention provides a method according to the second aspect of the invention, wherein a pressure and/or flow sensor, in fluid communication with said pressure chamber, transmits a signal, preferably an electronic signal, to a central processing unit for controlling the said high-pressure water jet device.

In a more preferred embodiment, the invention provides a method according to the second aspect of the invention, wherein said signal is processed for calculating a distance from the water jet cutter to the object to be cut. Such a signal and more specifically the information which can be derived therefrom, can be used for controlling the water jet cutting device.

In a preferred embodiment, the invention provides a method according to the second aspect of the invention, wherein the cutting speed of the cutting operation is determined according to the quality of the incision. If the quality of an incision is reduced, this can be observed almost immediately by means of a decrease in the observed flow rate throughout the above-mentioned fluid communication. The cutting operation is then resumed as soon as the flow rate through said fluid communication has exceeded a predetermined minimum value. In this way it can be predicted with great certainty whether an incision, for instance under water, is complete or not.

The invention provides a method according to the second aspect of the invention, wherein a pre-pressure is applied in said pressure chamber by means of a pump, preferably an air pump. This offers the advantage that the measuring equipment, in particular the pressure and/or flow sensor, is shielded from any incoming water. In an alternative embodiment, said pump is a liquid pump, preferably a water pump.

In a preferred embodiment, the invention provides a method according to the second aspect of the invention for incising a point-shaped cavity in a surface, whereby said pointed cavity is provided with a conical wall. In an analogous manner, the incision can be realized for a linear incision in a surface, whereby said linear incision is provided with an inclined wall with respect to the direction of the incision.

In a preferred embodiment, the invention provides a method according to the second aspect of the invention, wherein the pre-pressure of said pump is adjusted to adjust the degree of inclination of said conical wall of a point incision or of said inclined wall of a line incision. The inventors surprisingly found that the pressure realized by the pump has a direct influence on said gradient. This allows a very specific design to be realized in the object to be cut, even when the incision has very small dimensions; for example, when an incision with a diameter of 50 to 100 µm is realized. Thus, a cutting operation can be carried out in which the cutting operation is continued as long as the detected flow rate F corresponds to a preset flow rate F₁, and whereby the cutting operation is stopped as soon as the detected flow rate F is greater than or equal to a preset flow rate F₂.

In a preferred embodiment, the invention provides a method according to the second aspect of the invention, wherein the cutting operation is stopped as soon as said pressure sensor indicates a pressure drop, and/or, preferably, as soon as said flow rate sensor indicates a flow rate increase. The pressure drop or flow rate increase, respectively, provides an indication that the high-pressure water jet is not hindered any longer by an object to be cut and that the cutting operation is; therefore; complete. Preferably said cutting operation is stopped as soon as the detected pressure is smaller than a predetermined value or when the observed flow rate is greater, than a predetermined value. Stopping the cutting operation can occur specifically and preferably by stopping the abrasive jet supply in the water jet of the water jet device. The cutting operation is preferably stopped when a predetermined degree of inclination of the incision is obtained. This can be adjusted by determining the pre-set value for pressure and/or flow rate. Thus, a series of water jet cutting heads which are operated in parallel can still be controlled individually and it can be ensured that all incisions or cavities cut in parallel are provided with the same degree of inclination of the wall of the cavity.

In a preferred embodiment, the invention provides a method according to the second aspect of the invention, wherein the surface to be cut is an underwater structure, and whereby the cutting operation is continued along said surface as soon as said pressure sensor indicates a pressure drop and/or, preferably, as soon as the said flow sensor indicates a flow rate increase. Here, too, the pressure drop or flow rate increase provides an indication that the high-pressure water jet is not hindered any longer by an object to be cut and that the cutting operation is; therefore; complete. The cutting operation, for example along the circumference of a pipeline, can; therefore; be continued. Thus, a cutting operation can be performed whereby the cutting operation is continued, if the detected flow rate F is greater than or equal to a preset flow rate F₂, and wherein the cutting operation is delayed or stopped as soon as the detected flow rate F is smaller than a preset flow rate F₁. In addition, the inventors found that with a reduction in the quality of the incision, an early change in the measured flow rate could already be observed. In this way, an adjustment of the cutting operation can be carried out early, whereby the cutting quality of the incision is promoted.

In a third aspect the invention provides a use of a flow sensor for detecting an incision during a cutting operation with the assistance of a high-pressure water jet. This means that the flow sensor detects a flow rate or a change in flow rate, which is an indication of the completion of an incision in a surface to be cut.

## Claims

1. High-pressure water jet device comprising a section for generating a high-pressure water jet (1), wherein said section for generating a high-pressure water jet (1) debouches into a pressure chamber (2), wherein said pressure chamber (2) is provided with an opening (22) in a wall (21) of said pressure chamber (2) and wherein said pressure chamber (2) and said opening (22) are in fluid communication (23) with a pressure sensor (27) for determining a pressure through said fluid communication (22, 23) and/or wherein said pressure chamber (2) and said opening (22) are in fluid communication (23) with a flow sensor (27') for determining a flow rate through said fluid communication (22, 23), **characterized in that** said pressure chamber (2) and said opening (22) are in fluid communication (23, 24) with a pump (25) for preventing water from entering the fluid communication (22, 23).

2. Pressurized water jet device according to claim 1, whereby the internal wall of said pressure chamber (2) is conically provided.

3. High-pressure water jet device according to claim 1 to 2, whereby the external wall of said pressure chamber (2) is conically provided.

4. High-pressure water jet device according to at least one of claims 1 to 3, whereby said pressure sensor and/or said flow sensor are configured for transmitting a signal to a central processing unit (28) for controlling said high-pressure water jet device (1, 2).

5. High-pressure water jet device according to at least one of claims 1 to 4, whereby said high-pressure water jet device is configured to operate in an aqueous environment.

6. Method for water jet cutting a surface with a high-pressure water jet device, comprising the steps of: (i) generating a high-pressure water jet (18); and (ii) directing said high-pressure water jet (18) onto the surface to be cut (3), wherein said high-pressure water jet (18) is guided through a pressure chamber (2); wherein said pressure chamber (2) is provided with an opening (22) in a wall (21) of said pressure chamber (2), and wherein said pressure chamber (2) and said opening (22) are in fluid communication (23) with a pressure sensor (27) for determining a pressure through said fluid communication (22, 23) during step (ii) and/or wherein said pressure chamber (2) and said opening (22) are in fluid communication (23) with a flow sensor (27') for determining a flow rate through said fluid communication (22, 23) during step (ii), **characterized in that** a pre-pressure is applied in said pressure chamber (2) by means of the pump (25).

7. Method according to claim 6, whereby said pressure sensor and/or said flow sensor, in fluid communication with said pressure chamber (2), transmit a signal to a central processing unit (28) for controlling said high-pressure water jet device (1, 2).

8. Method according to at least one of claims 6 to 7, for incising a cavity in a surface (3), whereby said cavity is provided with a conical wall.

9. Method according to claim 6 to 8, whereby the pre-pressure of said pump (25) is set for adjusting the degree of inclination of said conical wall.

10. Method according to claim 8 or 9, whereby the incising operation is stopped as soon as said pressure sensor indicates a pressure drop, and/or said flow sensor indicates a flow rate increase.

11. Method according to claim 8 or 9 wherein the surface to be cut (3) is an underwater structure and whereby the cutting operation is continued along said surface (3) as soon as said pressure sensor indicates a pressure drop and/or as soon as said flow sensor indicates a flow rate increase.

## Patentansprüche

1. Hochdruck-Wasserstrahlvorrichtung, einen Abschnitt zum Erzeugen eines Hochdruck-Wasserstrahls (1) umfassend, wobei der Abschnitt zum Erzeugen eines Hochdruck-Wasserstrahls (1) seinen Weg in eine Druckkammer (2) nimmt, wobei die Druckkammer (2) mit einer Öffnung (22) in einer Wand (21) der Druckkammer (2) versehen ist und wobei die Druckkammer (2) und die Öffnung (22) in Fluidverbindung (23) mit einem Drucksensor (27) zum Bestimmen eines Drucks in der Fluidverbindung (22, 23) stehen und/oder wobei die Druckkammer (2) und die Öffnung in Fluidverbindung (23) mit einem Durchflusssensor (27') zum Bestimmen einer Durchflussmenge durch die Fluidverbindung (22, 23) stehen, **dadurch gekennzeichnet, dass** die Druckkammer (2) und die Öffnung (22) in Fluidverbindung (23, 24) mit einer Pumpe (25) zum Verhindern des Eintretens von Wasser in die Fluidverbindung (22, 23) stehen.

2. Vorrichtung für einen mit Druck beaufschlagten Wasserstrahl nach Anspruch 1, wobei die Innenwand der Druckkammer (2) konisch bereitgestellt ist.

3. Hochdruck-Wasserstrahlvorrichtung nach Anspruch 1 bis 2, wobei die Außenwand der Druckkammer (2) konisch bereitgestellt ist.

4. Hochdruck-Wasserstrahlvorrichtung nach mindestens einem der Ansprüche 1 bis 3, wobei der Drucksensor und/oder der Durchflusssensor dafür gestaltet sind, ein Signal an eine zentrale Verarbeitungseinheit (28) zum Steuern der Hochdruck-Wasserstrahlvorrichtung (1, 2) zu übertragen.

5. Hochdruck-Wasserstrahlvorrichtung nach mindestens einem der Ansprüche 1 bis 4, wobei die Hochdruck-Wasserstrahlvorrichtung dafür gestaltet ist, in einer wasserhaltigen Umgebung zu arbeiten.

6. Verfahren zum Wasserstrahlschneiden einer Oberfläche mit einer Hochdruck-Wasserstrahlvorrichtung, die Schritte des (I) Erzeugens eines Hochdruck-Wasserstrahls (18) und des (II) Richtens des Hochdruck-Wasserstrahls (18) auf die zu schneidende Oberfläche (3) umfassend, wobei der Hochdruck-Wasserstrahl (18) durch eine Druckkammer (2) geführt wird, wobei die Druckkammer (2) mit einer Öffnung (22) in einer Wand (21) der Druckkammer (2) versehen ist und wobei die Druckkammer (2) und die Öffnung (22) während Schritt (II) in Fluidverbindung (23) mit einem Drucksensor (27) zum Bestimmen eines Drucks in der Fluidverbindung (22, 23) stehen und/oder wobei die Druckkammer (2) und die Öffnung (22) während Schritt (II) in Fluidverbindung (23) mit einem Durchflusssensor (27') zum Bestimmen einer Durchflussmenge durch die Fluidverbindung (22, 23) stehen, **dadurch gekennzeichnet, dass** der Druck in der Druckkammer (2) mittels der Pumpe (25) angelegt wird.

7. Verfahren nach Anspruch 6, wobei der Drucksensor und/oder der Durchflusssensor in Fluidverbindung mit der Druckkammer (2) ein Signal an eine zentrale Verarbeitungseinheit (28) zum Steuern der Hochdruck-Wasserstrahlvorrichtung (1, 2) übertragen.

8. Verfahren nach mindestens einem der Ansprüche 6 bis 7 zum Einschneiden einer Aushöhlung in eine Oberfläche (3), wobei die Aushöhlung mit einer konischen Wand versehen ist.

9. Verfahren nach Anspruch 6 bis 8, wobei der Vordruck der Pumpe (25) zum Justieren des Neigungsgrades der konischen Wand eingestellt ist.

10. Verfahren nach Anspruch 8 oder 9, wobei der Einschneidevorgang gestoppt wird, sobald der Drucksensor einen Druckabfall angibt und/oder der Durchflusssensor eine Abnahme der Durchflussmenge angibt.

11. Verfahren nach Anspruch 8 oder 9, wobei die zu schneidende Oberfläche (3) eine Unterwasserstruktur ist und wobei der Schneidvorgang entlang der Oberfläche (3) fortgesetzt wird, sobald der Drucksensor einen Druckabfall angibt und/oder der Durchflusssensor eine Abnahme der Durchflussmenge angibt.

## Revendications

1. Dispositif à jet d'eau à haute pression comprenant une section pour générer un jet d'eau à haute pression (1), dans lequel ladite section pour générer un jet d'eau à haute pression (1) débouche dans une chambre de pression (2), dans lequel ladite chambre de pression (2) est dotée d'une ouverture (22) dans une paroi (21) de ladite chambre de pression (2) et dans lequel ladite chambre de pression (2) et ladite ouverture (22) sont en communication fluidique (23) avec un capteur de pression (27) pour déterminer une pression à travers ladite communication fluidique (22, 23) et/ou dans lequel ladite chambre de pression (2) et ladite ouverture (22) sont en communication fluidique (23) avec un débitmètre (27') pour déterminer un débit à travers ladite communication fluidique (22, 23), **caractérisé en ce que** ladite chambre de pression (2) et ladite ouverture (22) sont en communication fluidique (23, 24) avec une pompe (25) pour empêcher l'eau d'entrer dans la communication fluidique (22, 23).

2. Dispositif à jet d'eau sous pression selon la revendication 1, dans lequel la paroi interne de ladite chambre de pression (2) est prévue conique.

3. Dispositif à jet d'eau à haute pression selon la revendication 1 à 2, dans lequel la paroi externe de ladite chambre de pression (2) est prévue conique.

4. Dispositif à jet d'eau à haute pression selon au moins l'une des revendications 1 à 3, dans lequel ledit capteur de pression et/ou ledit débitmètre sont configurés pour transmettre un signal à une unité centrale (28) pour commander ledit dispositif à jet d'eau à haute pression (1, 2).

5. Dispositif à jet d'eau à haute pression selon au moins l'une des revendications 1 à 4, dans lequel ledit dispositif à jet d'eau à haute pression est configuré pour fonctionner dans un environnement aqueux.

6. Procédé de découpe par jet d'eau d'une surface avec un dispositif à jet d'eau à haute pression, comprenant les étapes de : (i) génération d'un jet d'eau à haute pression (18) ; et (ii) direction dudit jet d'eau à haute pression (18) sur la surface à découper (3), dans lequel ledit jet d'eau à haute pression (18) est guidé à travers une chambre de pression (2) ; dans lequel ladite chambre de pression (2) est dotée d'une ouverture (22) dans une paroi (21) de ladite chambre de pression (2), et dans lequel ladite chambre de pression (2) et ladite ouverture (22) sont en communication fluidique (23) avec un capteur de pression (27) pour déterminer une pression à travers ladite communication fluidique (22, 23) pendant l'étape (ii) et/ou dans lequel ladite chambre de pression (2) et ladite ouverture (22) sont en communication fluidique (23) avec un débitmètre (27') pour déterminer un débit à travers ladite communication fluidique (22, 23) pendant l'étape (ii), **caractérisé en ce qu'une** pré-pression est appliquée dans ladite chambre de pression (2) au moyen de la pompe (25).

7. Procédé selon la revendication 6, dans lequel ledit capteur de pression et/ou ledit débitmètre, en communication fluidique avec ladite chambre de pression (2), transmettent un signal à une unité centrale (28) pour commander ledit dispositif à jet d'eau à haute pression (1, 2).

8. Procédé selon au moins l'une des revendications 6 à 7, pour inciser une cavité dans une surface (3), dans lequel ladite cavité est dotée d'une paroi conique.

9. Procédé selon la revendication 6 à 8, dans lequel la pré-pression de ladite pompe (25) est réglée pour ajuster le degré d'inclinaison de ladite paroi conique.

10. Procédé selon la revendication 8 ou 9, dans lequel l'opération d'incision est arrêtée dès que ledit capteur de pression indique une chute de pression, et/ou que ledit débitmètre indique une augmentation de débit.

11. Procédé selon la revendication 8 ou 9 dans lequel la surface à découper (3) est une structure sous-marine et dans lequel l'opération de découpe est poursuivie le long de ladite surface (3) dès que ledit capteur de pression indique une chute de pression et/ou dès que ledit débitmètre indique une augmentation de débit.
